# EUROPÄISCHE PATENTSCHRIFT

(11) **EP 3 204 202 B1**
(45) Veröffentlichungstag und Bekanntmachung des Hinweises auf die Patenterteilung: **21.11.2018**
(21) Anmeldenummer: 15793695.6
(22) Anmeldetag: 09.10.2015
(51) Int. Cl.: B27G 13/10

(54) **MESSERKOPF ZUR SPANENDEN BEARBEITUNG VON WERKSTOFFEN UND MESSER HIERFÜR**
CUTTER HEAD FOR CUTTING MATERIALS, AND CUTTER THEREFOR
TÊTE DE LAME PERMETTANT L'USINAGE DE MATÉRIAU PAR ENLÈVEMENT DE COPEAUX ET LAME SERVANT AUDIT USINAGE

(30) Priorität: 10.10.2014 DE 102014015199
(43) Veröffentlichungstag der Anmeldung: 16.08.2017
(73) Patentinhaber: Leitz GmbH & Co. KG, 73447 Oberkochen (DE)
(72) Erfinder: SCHLOSSER, Robert, A-4741 Wendling (AT); HÄUPL, Franz, A-4720 Neumarkt i. Hr. (AT) (AT); GALEITHNER, Christoph, A-4721 Altschwendt (AT); MAIER, Erich, A-4770 Andorf (AT)
(74) Vertreter: Rehmann, Thorsten
(86) Internationale Anmeldenummer: PCT/DE2015/000496
(87) Internationale Veröffentlichungsnummer: WO 2016/055044

(56) Entgegenhaltungen:
- EP-B1- 0 821 637
- WO-A1-2008/138326
- CH-A5- 682 470
- US-A- 5 647 699
- US-A1- 2005 067 051
- US-A1- 2009 245 947

## Beschreibung

Die Erfindung betrifft einen Messerkopf zur spanenden Bearbeitung von Werkstoffen, insbesondere Holzwerkstoffe, Kunststoffe, Leichtmetallwerkstoffe und/oder Verbundwerkstoffe mit mindestens einem Messer und einem Tragkörper, in dem mindestens eine nach radial außen offene Ausnehmung zur Aufnahme des mindestens einen Messers und eines über eine Spannschraube betätigbaren Spannbackens, mittels dessen das Messer in der Ausnehmung festspannbar ist, vorgesehen sind, wobei die Ausnehmung einen Anschlag mit einer nach radial innen gerichteten Anschlagfläche aufweist und das Messer gegen die Kraft mindestens eines elastischen Elements in die Ausnehmung einsetzbar ist. Außerdem betrifft die Erfindung ein Messer zur Verwendung in diesem Messerkopf.

Ein solcher Messerkopf ist beispielsweise aus der EP 1 074 357 A2 bekannt. Solche Messerköpfe werden zum Bearbeiten, beispielsweise zum Herstellen von Profilen, von Vollholz und Holzwerkstoffen verwendet. Das Messer ist mit einer Aufspannplatte verschraubt, auf die die Feder einwirkt und die Aufspannplatte gegen den Umfang des Tragkörpers beaufschlagt. An der Aufspannplatte ist ein Rastvorsprung vorgesehen, der in eine Nut in der Ausnehmung eingreift und an deren radial äußeren Wandung zur Anlage gelangt. Grundsätzlich ist zwar eine Vorpositionierung des Messers möglich, sie ist aber aus zwei Gründen nicht exakt. Dadurch, dass das Messer mit der Aufspannplatte verschraubt ist, sind in radialer Richtung Toleranzen vorhanden. Außerdem liegt der an der Aufspannplatte vorgesehene Rastvorsprung vollflächig an der radialen äußeren Wandung der in der Ausnehmung vorgesehenen Nut an. Diese Anlagefläche ist überbestimmt. Durch die Überbestimmung und die Toleranzen kann die Vorpositionierung nicht exakt sein.

Bei dem aus der EP 0 652 816 B1 bekannten Messerkopf wird das Messer in die Ausnehmung eingelegt und greift mit einer an seiner Spanfläche vorgesehenen Nut in eine am Spannbacken vorgesehene Rippe ein. Durch Verdrehen der Spannschraube wird der Spannbacken gegen das Messer geschwenkt und zieht das Messer bei weiterem Spannen nach radial innen, sodass die Positionierung des Messers nach radial innen erfolgt. Fixiert wird das Messer in der Ausnehmung rein reibschlüssig. Über die Rippe erfolgt keine Positionierung des Messers in radialer Richtung, sondern die Rippe übernimmt eine reine Sicherungsfunktion, wenn die Reibschlussverbindung zwischen Messer und Ausnehmung in Folge zu geringer Spannkraft zu niedrig wird.

Die DE 30 43 146 A1 offenbart einen Messerkopf, bei dem das Messer in eine Ausnehmung im Spannbacken eingesetzt wird. Mittels der Spannschraube wird der Spannbacken in tangentialer Richtung verschoben. Dabei greift eine an der Spanfläche des Messers vorgesehene Quernut in eine in der Ausnehmung am Tragkörper vorgesehene Rippe ein. Durch eine Keilform des Spannbackens wird das Messer beim weiteren Spannen nach radial außen gegen die Rippe im Tragkörper gezogen, sodass eine Positionierung des Messers in einer Richtung nach radial außen erfolgt.

Die Schneide der Messer ist extrem scharf, sodass die Bedienperson beim Einsetzen des Messers höchste Sorgfalt walten lassen muss, um eine Verletzungsgefahr auszuschließen. Die Positionierung des Messers erfolgt bei den bekannten Messerköpfen allein durch die Bewegung des Spannbackens. Ist das Messer gegenüber der Ausnehmung bzw. dem Spannbacken nicht exakt ausgerichtet kann es sich in seinem Sitz verspannen, sodass keine optimale Positionierung des Messers in radialer Richtung erfolgt. Eine manuelle Positionierung des Messers am Anschlag ist mit einer erhöhten Verletzungsgefahr an der Schneide verbunden.

Die DE 27 13 118 A1 offenbart ein Messer, in dem sich über die ganze Länge eine Nut erstreckt. Zusätzlich zu der Nut sind Einsenkungen vorgesehen, die bei der Einspannung des Messers in den Messerkopf in Anspruch genommen werden können.

Die DE 198 13 084 C1 offenbart einen Messerkopf, bei dem der Spannbacken zur Positionierung des Messers von einer Druckfeder vorgespannt ist. Zur Entnahme des Messers muss der Spannbacken gegen die Kraft der Druckfeder nach radial innen verschoben werden.

Bei dem aus der EP 0 821 637 B1 bekannten Messerkopf wird das Messer zunächst in eine Halteleiste eingelegt, die dann mittels des Druckbackens gegen eine Anschlagleiste gepresst wird, die im Tragkörper formschlüssig angeordnet ist. Zwischen der Halteleiste und dem Druckbacken ist eine Feder angeordnet. Die Positionierung des Messers im Messerkopf erfolgt nach radial außen.

Die EP 2 148 768 B1 offenbart einen Messerkopf, bei dem der Spannbacken federnd in Richtung auf das Messer ausgebildet ist. Durch die federnde Ausbildung wird das Messer im Bereich seiner Schneide auch dann fest in seinem Sitz eingespannt, wenn es aufgrund einer Nachbearbeitung oder aufgrund von Fertigungstoleranzen zu Abweichungen bezüglich der Planheit der Anlageflächen des Messers kommt. Durch die federnde Ausbildung werden außerdem auch Ungenauigkeiten kompensiert, die auftreten können, wenn das Schneidelement schräg eingesetzt ist oder der Tragkörper Verformungen in Folge längeren Gebrauchs aufweist.

Von dieser Problemstellung ausgehend soll der eingangs beschriebene Messerkopf so verbessert werden, dass eine einfache und sichere Positionierung des Messers im Tragkörper möglich ist, und insbesondere die Vorpositionierung des Messers im Tragkörper verbessert wird.

Zur Problemlösung zeichnet sich ein gattungsgemäßer Messerkopf dadurch aus, dass das Messer eine nach radial außen gerichtete Anschlagfläche aufweist, die zu einer Längsachse in einem Winkel von 92° bis 112° verläuft und das Messer von dem elastischen Element mit seiner Anschlagfläche in Richtung nach radial außen an die nach radial innen gerichtete Anschlagfläche anlegbar ist.
Durch dieser Ausgestaltung des Messerkopfes ist es möglich, das Messer von Hand in die Ausnehmung einzusetzen, leicht gegen den Boden zu drücken und dabei das Messer so zu verschwenken, dass die an ihm ausgebildete Anschlagfläche in Überdeckung zum Anschlag in der Ausnehmung gelangt. Wird das Messer losgelassen, schlägt es selbsttätig an den Anschlag an, sodass es exakt vorpositioniert ist und über den Spannbacken nur noch festgespannt und nicht mehr positioniert werden muss. Mangels Verschraubung des Messers mit einer Anschlagplatte entfallen die Toleranzen. Durch die Schrägstellung der Anschlagfläche gegenüber dem in der Ausnehmung im Tragkörper vorgesehenen Anschlag stellt sich anstatt einer Kontaktfläche eine Kontaktlinie (Punktbelastung) ein, sodass keine Überbestimmung vorhanden ist und das Messer toleranzfrei vorpositioniert werden kann. Durch die form- und reibschlüssige Verbindung des Messers in der Ausnehmung sind Schnittgeschwindigkeiten über 120 m/s möglich. Bei bisher üblichen Werkzeugen sind maximale Schnittgeschwindigkeiten in einem Bereich von 80 bis 90 m/s möglich. Die Positionierung des Messers in Richtung nach radial außen stellt außerdem sicher, dass es bei höheren Schnittgeschwindigkeiten, also bei einer hohen Drehzahl des Werkzeuges, nicht zu einer radialen Verschiebung des Messers in Folge der hohen Fliehkräfte kommen kann.

Vorzugsweise beträgt der Winkel 92° bis 110°, insbesondere 95° ± 2° und ganz besonders vorzugsweise exakt 95°.

Wenn das Messer mit einer Nut versehen ist, die mit mindestens einem am Spannbacken vorgesehenen Vorsprung zusammenwirkt, kann das Messer durch Druck auf den Spannbacken in seine vorpositionierte Stellung gebracht werden, wodurch eine Verletzungsgefahr beim Einsetzen des Messers weiter reduziert wird.

Der Anschlag im Messerkopf kann an einem in der Ausnehmung vorgesehenen Vorsprung und/oder an einer Nutwandung ausgebildet sein.

Die Anschlagfläche am Messer ist vorzugsweise eine Wandung einer im Messer angeordneten Nut. Die Anschlagfläche kann aber auch an einem am Messer vorgesehenen Absatz vorgesehen sein. Auch kann die Anschlagfläche an mindestens einem nach radial außen gerichteten Vorsprung am Absatz ausgebildet sein.

Das elastische Element ist vorzugsweise ein Elastomerelement und kann am Messer oder am Spannbacken angebracht sein. Auch ist es möglich, das Element mit der Spannschraube zu verbinden und vorzugsweise hierzu eine auf die Spannschraube aufgelegte Scheibe zu verwenden. Über das Elastomerelement wird bevorzugt nicht nur das Messer, sondern auch der Spannbacken positioniert, sodass das Messer mit dem Spannbacken zusammen eine Vorpositionierung erfährt.

Ein Messer zur Verwendung in einem erfindungsgemäß ausgestalteten Messerkopf, das eine Schneide, einen Rücken, eine Spanfläche, einen Fuß, eine Längsachse und eine Querachse aufweist, zeichnet sich durch eine am Rücken in Richtung der Schneide weisende Anschlagfläche aus, die sich in Richtung der Querachse (Querrichtung) erstreckt und zu der Längsachse in einem Winkel von 92° bis 112°, vorzugsweise 92° bis 110°, insbesondere 95° ± 2° und besonders bevorzugt in exakt 95°, verläuft.

Vorzugsweise ist die Anschlagfläche an einem vom Rücken hervorstehenden Absatz ausgebildet. Der Absatz kann beispielsweise eine über den Rücken hervorstehende Unterlippe einer Nut sein. Das Messer weist in diesem Fall dann einen im Wesentlichen L-förmigen Querschnitt auf.

Die Anschlagfläche kann aber auch an mindestens einem am Absatz angeordneten Vorsprung ausgebildet sein, der in Richtung der Schneide weist. Vorzugsweise ist die Anschlagfläche ballig ausgebildet.

Für eine spielfreie axiale Spannung des Messers kann ein vom Fuß ausgehender in Richtung der Schneide verlaufender Schlitz vorgesehen sein, der zum Rücken und zur Spanfläche offen ist.

Um das Messer für die Montage mit dem Spannbacken in Verbindung zu bringen, ist vorzugsweise in der Spanfläche eine in Richtung der Querachse verlaufende Nut vorgesehen. Um den Querschnitt des Messers nicht über Gebühr zu reduzieren ist die in der Spanfläche vorgesehene Nut vorzugsweise gegenüber der im Rücken vorgesehenen Nut in Längsrichtung versetzt. Insbesondere vorzugsweise ist der Abstand der Nut in der Spanfläche zum Fuß kleiner als der Abstand der Anschlagfläche in der Nut im Rücken zum Fuß.

Das Messer kann als Verbundmesser ausgebildet sein. Die Schneide ist dann vorzugsweise an einer Platte ausgebildet, die mit einem Schneidenträger verbunden ist. Die Platte und der Schneidenträger bestehen aus unterschiedlichen Materialien. Die Platte, an der die Schneide ausgebildet ist, besteht aus einem höherwertigen Werkstoff als der Schneidenträger vorzugsweise aus einem höherlegierten Stahl, einem gesinterten Werkstoff, aus Diamant oder es ist eine Hartstoffbeschichtung an der Platte vorgesehen.

Das Messer kann vorzugsweise aus einem gesinterten Werkstoff bestehen. Dann ist sein Rücken bevorzugt sinterroh ausgebildet. Wenn die Anschlagfläche ballig ausgebildet ist, kann sie auch sinterroh ausgeführt sein.

Mit Hilfe einer Zeichnung sollen Ausführungsbeispiele der Erfindung nachfolgend näher beschrieben werden.

Es zeigen:
- Figur 1 -: eine perspektivische Teil-Explosionsdarstellung des Messerkopfes;
- Figur 2 -: ein vergrößerter Ausschnitt aus Figur 1;
- Figur 3 -: die Ansicht gemäß Sichtpfeil III nach Figur 2;
- Figur 4 -: perspektivische Teildarstellung des Werkzeugs;
- Figur 5 -: einen vergrößerten Teilschnitt gemäß Schnittlinie V-V in Figur 4;
- Figur 6 -: einen vergrößerten Teilschnitt gemäß der Schnittlinie VI-VI in Figur 4;
- Figur 7 -: eine Draufsicht auf den Spannbacken;
- Figur 8 -: einen Schnitt durch den Spannbacken entlang der Schnittlinie VIII-VIII in Figur 7;
- Figur 9 -: eine erste perspektivische Ansicht des Spannbackens;
- Figur 10 -: eine zweite perspektivische Ansicht des Spannbackens;
- Figur 11 -: eine erste Ausführungsforme eines Messers in perspektivischer Darstellung;
- Figur 12 -: das Messer nach Figur 11 in einer anderen Perspektive;
- Figur 13 -: eine Seitenansicht des Messers nach Figur 11;
- Figur 14 -: eine zweite Ausführungsform eines Messers in perspektivischer Darstellung;
- Figur 15 -: die Seitenansicht des Messers nach Figur 14;
- Figur 16 -: eine dritte Ausführungsform eines Messers in perspektivischer Darstellung;
- Figur 17 -: das Messer nach Figur 16 in einer anderen Perspektive;
- Figur 18 -: eine vierte Ausführungsform eines Messers in perspektivischer Darstellung;
- Figur 19 -: das Messer nach Figur 18 in einer anderen Perspektive;
- Figur 20 -: eine weitere Ausführungsform eines Messers;
- Figur 21 -: eine weitere Ausführungsform eines Messers;
- Figur 22 -: eine weitere Ausführungsform eines Messers;
- Figur 23 -: eine weitere Ausführungsform eines Messers;
- Figur 24 -: die Seitenansicht des Messers nach Figur 23;
- Figur 25 -: die weitere Ausführungsform eines Messers;
- Figur 26 -: die weitere Ausführungsform eines Messers,
- Figur 27 -: eine weitere Ausführungsform eines Messers.

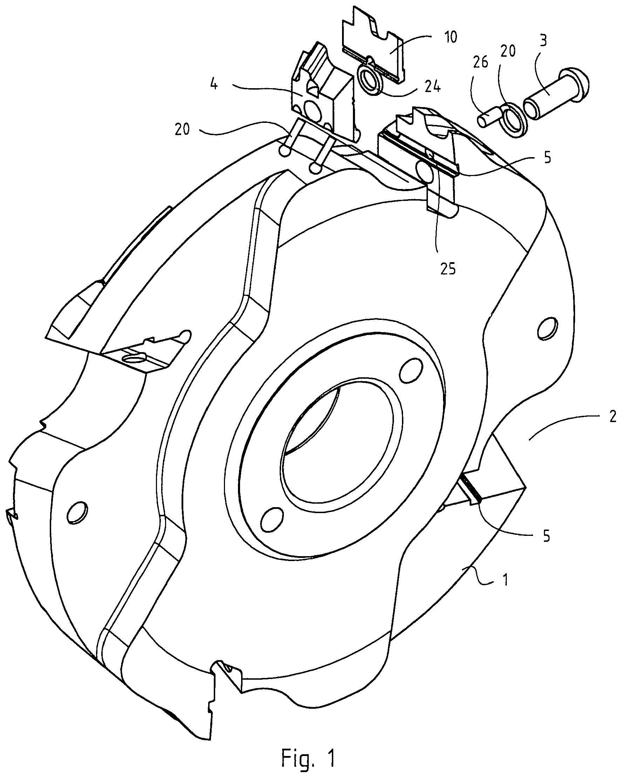

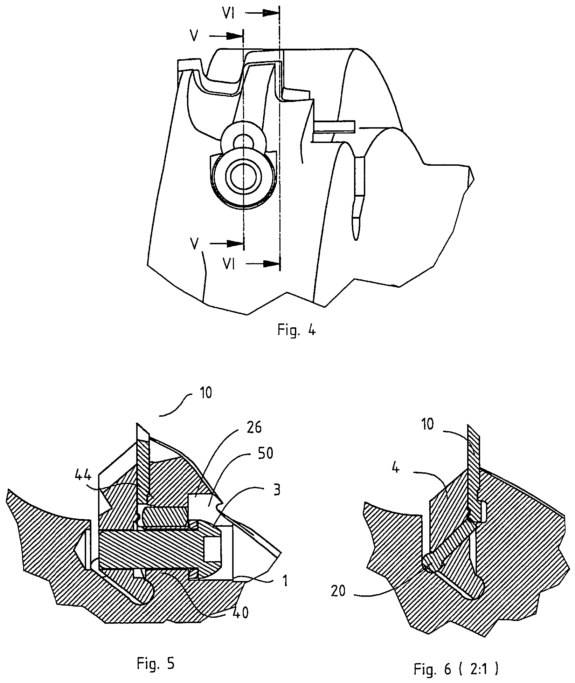

Die Figuren 1 bis 5 lassen den Aufbau des Messerkopfes, mit dem insbesondere Holzwerkstoffe, Kunststoffe oder Leichtmetallwerkstoffe bzw. Verbundwerkstoffe spanend bearbeitet werden können.

Er besteht aus dem Tragkörper 1, in dem mehrere regelmäßig zueinander beabstandete, nach radial außen offene Ausnehmungen 2 vorgesehen sind. In den Ausnehmungen 2 wird jeweils ein Messer 10 mittels eines Spannbackens 4 und einer Spannschraube 3 mit einer Unterlegscheibe 50, auf die eine elastische Scheibe 24 aufgesetzt ist, verspannt. In er Ausnehmung 2 ist eine in Axialrichtung A (Querachse Q) verlaufende Nut 9 eingebracht, deren radial außenliegende Wandung einen Anschlag 5 ausbildet, der mit einer am Messer 10 vorgesehenen Anschlagfläche 15 zusammenwirkt. Der Spannbacken 4 weist an seinem radial inneren Ende einen Fuß 40 auf, der in einer in der Ausnehmung 2 eingebrachten Hinterschneidung 8 sitzt. Die Kontur der Hinterschneidung 8 ist der Kontur des Fußes 40 angepasst. Die Umfangskontur des Spannbackens 4 entspricht im Wesentlichen der Profilierung des Messers 10, um eine sichere Abstützung des Messers 10 im Betrieb und ein Ausbrechen der Schneide 14 zu verhindern.

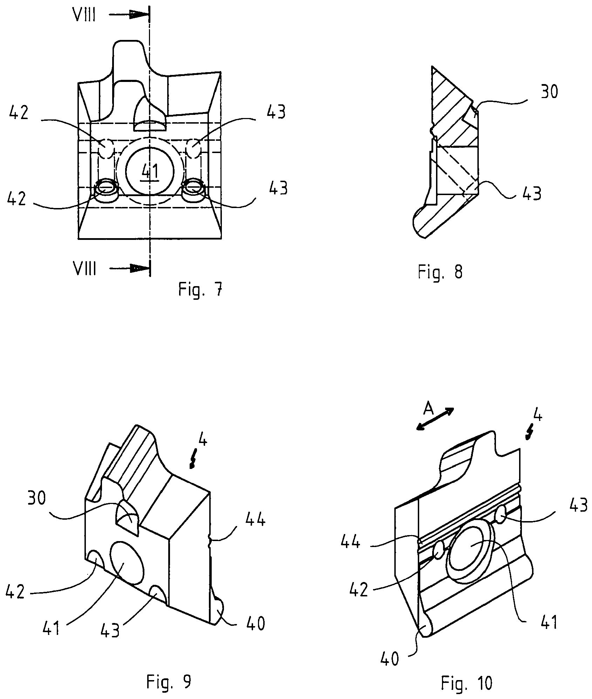

Im Spannbacken 4 ist eine Gewindebohrung 41 vorgesehen, in die die Spannschraube 3 eingeschraubt werden kann; sowie zwei schräg verlaufende Bohrungen 42, 43, in die je ein elastisches Element 20 eingesteckt werden kann. An der der Nut 9 zugewandten Seite des Spannbackens 40 ist ein in Axialrichtung A verlaufender Vorsprung 44 vorgesehen, der mit einer in der Spanfläche 11 des Messers 10 in Axialrichtung A verlaufenden Nut 19 zusammenwirkt. Die Nut 19 hat die Funktion einer Montagenut. Sie übernimmt keine Haltekräfte. Zur axialen Positionierung des Messers 10 ist an seiner Unterseite eine vom Fuß 13 ausgehende Ausnehmung 101 vorgesehen, die auf einen in eine in der radialen Wandung der Nut 9 eingebrachten Bohrung 25 einsetzbaren Positionierstift 26 aufgesetzt werden kann. Zur Montageerleichterung beim Einsetzen des Messers 10 ist in diesem eine Ausnehmung 30 vorgesehen. Ein Betätigungswerkzeug für den Spannmechanismus (Torx-Schraubendreher) kann axial in die Ausnehmung 30 eingeführt werden, um den Spannbacken 4 bei lose eingelegtem Messer 10 gegen die Federkraft der elastischen Elemente 20 nach radial innen zu drücken. Dabei wird das Messer durch den Formschluss über die Nut 19 mitgenommen und rastet mit der Anschlagfläche 15 am Anschlag 5 ein (vgl. Figuren 7 bis 10).

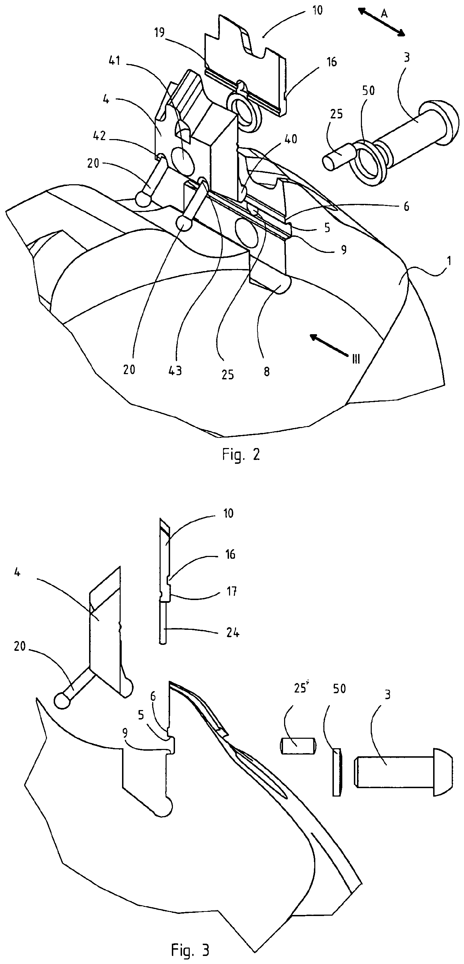

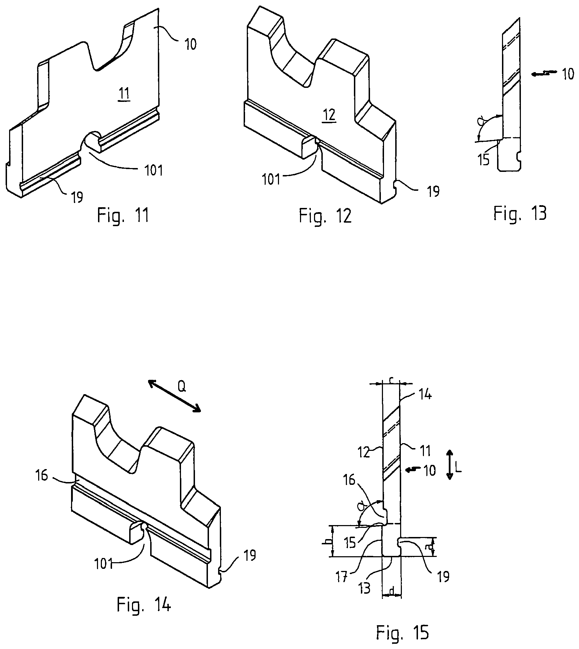

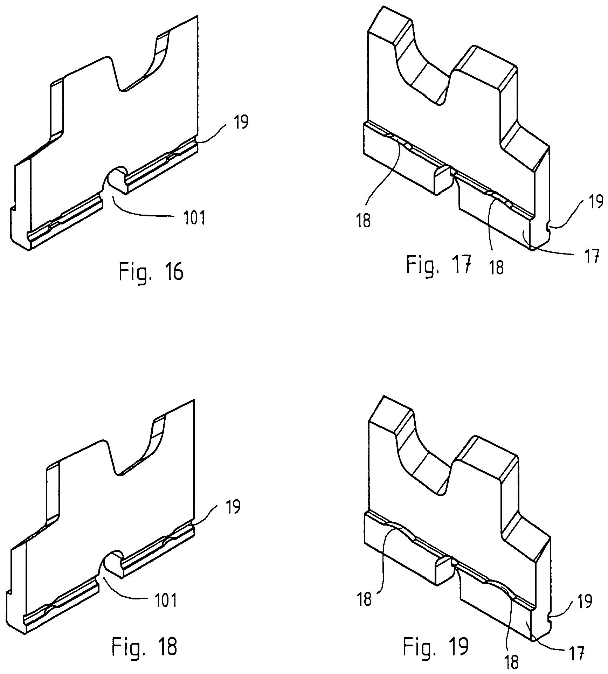

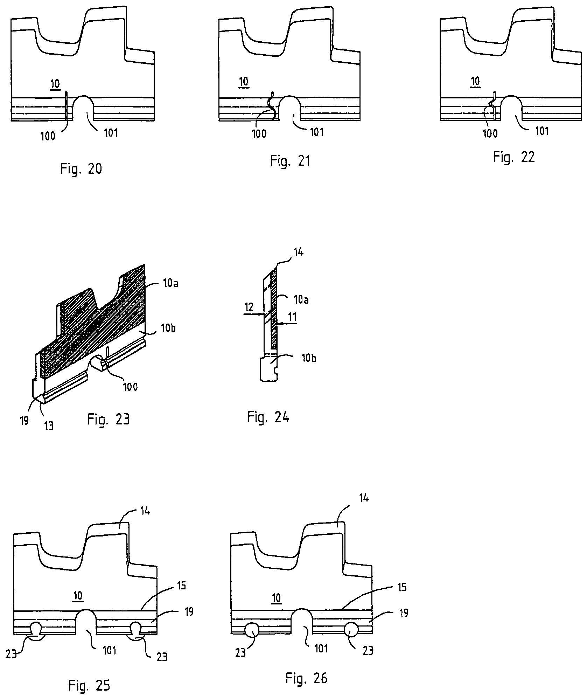

Das Messer 10 weist an seinem der Spanfläche 11 gegenüberliegenden Rücken 12 eine Anschlagfläche 15 auf, die mit dem in der Ausnehmung 2 im Tragkörper 1 ausgebildeten Anschlag 5, mit einer nach radial innen gerichteten Anschlagfläche, der an der oberen Wandung der in der Ausnehmung verlaufenden Nut 9 bzw. einem Vorsprung 6 vorgesehen ist (Figuren 2, 3), zusammenwirkt. Die Anschlagfläche 15 kann an einem Absatz 17 (vgl. Figur 13) oder an der dem Fuß 13 zugewandten Wandung einer in Axialrichtung A (Querachse Q) verlaufenden Nut 16 (vgl. Figuren 14 und 15) ausgebildet sein. Die Anschlagfläche 15 kann auch an Vorsprüngen 18 ausgebildet sein, die entweder am Absatz 17 (vgl. Figuren 17 und 19) oder in der unteren Wandung der Nut 16 vorgesehen sind. Wie Figur 15 zeigt ist die Dicke d des Fußes 13 des Messers 10 größer als die Dicke c des übrigen Messers 10, sodass die Anschlagfläche 15 sowohl an der Wandung der Nut 16 als auch an einem Absatz ausgebildet ist. Um in Axialrichtung A im Messer 10 eine Elastizität einstellen zu können, kann - unmittelbar benachbart zu der für die axiale Ausrichtung des Messers 10 vorgesehenen Aussparung 101 - ein sich vom Fuß 13 in Richtung der Schneide 14 (radiale Richtung) erstreckender Schlitz 100 eingebracht sein, der wie die Figuren 20 bis 22 zeigen, einen unterschiedlichen Verlauf haben kann. Der Schlitz 100 ragt über die volle Breite des Messers 10, er erstreckt sich also von der Spanfläche 11 bis zum Rücken 12.

Der Abstand a von der der Schneide 14 näherliegenden Wandung der Nut 19 zum Fuß ist kleiner als der Abstand b der Anschlagfläche 15 zum Fuß 13. Grundsätzlich ist es vorteilhaft, wenn die Nuten 19 und 16 nicht in derselben Ebene verlaufen, weil dies den Querschnitt des Messers 10 so weit schwächen würde, dass eine Bruchgefahr bestehen kann. Wenn die Nut 19 oberhalb der Nut 16 angeordnet ist, liegt die Nut 19 so dicht an der Schneidkante, dass die Profiltiefe des Messers 10 eingeschränkt würde. Die Anschlagfläche 15 ist gegenüber der Längsachse L in einem Winkel α von 90° bis 110° geneigt. Vorzugsweise beträgt der Winkel α 95°. Im Fuß 13 können elastische Elemente 23 eingesetzt sein, die über die Fläche des Fußes 13 hinausragen (vgl. Figuren 25 und 26). Wie Figuren 23 und 24 zeigen, kann das Messer 10 als Verbundteil ausgebildet sein. Hierzu ist eine Platte 10a, an der die Schneide 14 ausgebildet ist, in den Schneidenträger 10b eingesetzt und mit diesem fest verbunden, beispielsweise verlötet oder eingeklebt. Die Platte 10a besteht aus einem qualitativ höherwertigem Werkstoff als der Schneidenträger 10b. Ansonsten ist das Messer wie vorstehend beschrieben ausgebildet.

Zur Montage und Einspannung des Messers 10 wird dieses zunächst auf den Spannbacken 4 aufgelegt, mit seiner Aussparung 101 gegenüber dem Positionierstift 26 in Axialrichtung A positioniert und mit der Nut 19 auf dem am Spannbacken 4 ausgebildeten Vorsprung 44 auf- bzw. angelegt (Montagenut). Der Fuß 13 des Messers 10 liegt dabei auf den in die Bohrungen 42, 43 eingesteckten aus einem Elastomer bestehenden elastischen Elementen 20 auf. Die Elemente 20, die auch Druckfedern sein können, haben einen Durchmesser von etwa 2mm. Über die Nut 19 und den Vorsprung 44 sind das Messer 10 und der Spannbacken 4 formschlüssig miteinander verbunden, sodass das Messer 10, wenn der Spannbacken nach radial innen gedrückt wird, mitgezogen wird. Beim Verschwenken des Spannbackens 4 um seinen Fuß 40 herum gelangen die Anschlagfläche 15 am Messer 10 und der Anschlag 5 in der Ausnehmung 2 in Überdeckung. Die beiden elastischen Elemente 20, die in die Bohrungen 42, 43 eingesteckt sind, stützen sich im Tragkörper 1 ab, sodass der Spannbacken 4 zusammen mit dem Messer 10 vorpositioniert wird. Denkbar ist auch nur ein einziges elastisches Element 20 zu verwenden.

Die aus einem Elastomer bestehende elastische Scheibe 14, die auf die Spannschraube 3 aufgesteckt ist, wird bei einer Bewegung des Messers 10 nach radial innen vorgespannt. Wird der Spannbacken 4 entlastet (losgelassen) drückt das elastische Element 24 das Messer 10 nach radial außen, bis die Anschlagfläche 15 mit dem Anschlag 5 in Kontakt gelangt und dadurch das Messer 10 nach radial außen positioniert wird. Durch Eindrehen der Spannschraube 3 in die Gewindebohrung 41 verschwenkt der Spannbacken 4 weiter und spannt das Messer 3 in der Ausnehmung 2 fest. Anstelle der elastischen Elemente 20, die in die Bohrungen 42, 43 im Spannbacken 4 eingesetzt sind, können auch elastische Elemente 23 verwendet werden, die in den Fuß 13 des Messers 10 eingesteckt sind (Figuren 25, 26).

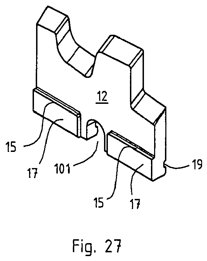

Bei der in Figur 27 dargestellten Ausführungsform eines bevorzugt aus einem gesinterten Werkstoff bestehenden Messers 10 ist die Anschlagfläche 15 als Vorsprung ausgeführt und verläuft nicht durchgehend, sondern ist auf zwei Bereiche links und rechts von der Aussparung 101 aufgeteilt. In einer bevorzugten Ausführungsform sind die Anschlagflächen 15 und der Rücken 12 sinterroh. Damit sichergestellt ist, dass es an der Anschlagfläche 15 definierte Anschlagbereiche gibt, sind die beiden Bereiche der Anschlagfläche 15 leicht konvex (ballig) ausgebildet.

### Bezugszeichenliste

- 1: Schneidenträger
- 2: Ausnehmung
- 3: Spannschraube
- 4: Spannbacken
- 5: Anschlag
- 6: Vorsprung
- 8: Hinterschneidung
- 9: Nut
- 10: Messer
- 10a: Platte
- 10b: Schneidenträger
- 11: Spanfläche
- 12: Rücken
- 13: Fuß
- 14: Schneide
- 15: Anschlagfläche
- 16: Nut
- 17: Absatz
- 18: Vorsprung
- 19: Nut
- 20: elastisches Element/ Elastomerelement
- 23: elastisches Element/ Elastomerelement
- 24: elastisches Element/ Elastomerelement
- 25: Bohrung
- 26: Positionierstift
- 30: Ausnehmung
- 40: Fuß
- 41: Gewindebohrung
- 42: Bohrung
- 43: Bohrung
- 44: Bohrung
- 50: Unterlegscheibe
- 100: Schlitz
- 101: Aussparung
- A: Axialrichtung
- a: Abstand
- b: Abstand
- c: Dicke
- d: Dicke
- L: Längsachse
- Q: Querachse

## Patentansprüche

1. Messerkopf zur spanenden Bearbeitung von Werkstoffen, insbesondere Holzwerkstoffe, Kunststoffe, Leichtmetallwerkstoffe und/oder Verbundwerkstoffe hieraus, mit mindestens einem Messer (10) und einem Tragkörper (1), in dem mindestens eine nach radial außen offene Ausnehmung (2) zur Aufnahme des mindestens einen Messers (10) und eines über eine Spannschraube (3) betätigbaren Spannbackens (4), mittels dessen das Messer (10) in der Ausnehmung (2) festspannbar ist, vorgesehen sind, wobei die Ausnehmung (2) einen Anschlag (5), mit einer nach radial innen gerichteten Anschlagfläche aufweist und das Messer (10) gegen die Kraft mindestens eines elastischen Elements (20, 23, 24) in die Ausnehmung (2) einsetzbar ist, **dadurch gekennzeichnet, dass** das Messer (10) eine nach radial außen gerichtete Anschlagfläche (15) aufweist, die zu einer Längsachse (L) in einem Winkel von 92° bis 112° verläuft, und das Messer (10) von dem elastischen Element (20, 23, 24) mit seiner Anschlagfläche (15) in Richtung nach radial außen an die nach radial innen gerichtete Anschlagfläche anlegbar ist.

2. Messerkopf nach Anspruch 1, **dadurch gekennzeichnet, dass** der Winkel 92° bis 110°, insbesondere 95° ± 2°, vorzugsweise exakt 95° beträgt.

3. Messerkopf nach Anspruch 1 oder 2, **dadurch gekennzeichnet, dass** das Messer (10) mit einer Nut (19) versehen ist, die mit mindestens einem am Spannbacken (4) vorgesehenen Vorsprung (44) zusammenwirkt.

4. Messerkopf nach einem der vorstehenden Ansprüche, **dadurch gekennzeichnet, dass** der Anschlag (5) an einem Vorsprung (6) und/oder einer Nutwandung ausgebildet ist.

5. Messerkopf nach einem der Ansprüche 1 bis 3, **dadurch gekennzeichnet, dass** die Anschlagfläche (15) eine Wandung einer im Messer (10) angeordneten Nut (16) ist, oder an einem am Messer (10) vorgesehenen Absatz (17) gebildet wird.

6. Messerkopf nach Anspruch 5, **dadurch gekennzeichnet, dass** am Absatz (17) mindestens ein nach radial außen gerichteter Vorsprung (18) vorgesehen ist, an dem die Anschlagfläche (15) ausgebildet ist.

7. Messerkopf nach einem der vorstehenden Ansprüche, **dadurch gekennzeichnet, dass** das elastische Element (20) am Spannbacken (4) angebracht ist.

8. Messerkopf nach einem der Ansprüche 1 bis 6, **dadurch gekennzeichnet, dass** das elastische Element (24) mit der Spannschraube (3) in Verbindung steht, vorzugsweise eine auf die Spannschraube (3) aufgelegte Scheibe ist.

9. Messer (10) zur Verwendung in einem Messerkopf nach einem der vorstehenden Ansprüche mit einer Schneide (14), einem Rücken (12), einer Spanfläche (11), einem Fuß (13) und einer Längsachse (L) sowie einer Querachse (Q), **gekennzeichnet durch** eine am Rücken (12) in Richtung der Schneide (14) weisende Anschlagfläche (15), die sich in Richtung der Querachse (Q) erstreckt und zu der Längsachse (L) in einem Winkel (α) von 92° bis 112° verläuft.

10. Messer (10) nach Anspruch 9, **dadurch gekennzeichnet, dass** der Winkel 92° bis 110°, insbesondere 95° ± 2°, vorzugsweise exakt 95° beträgt.

11. Messer (10) nach Anspruch 9 oder 10, **dadurch gekennzeichnet, dass** die Anschlagfläche (15) an einem vom Rücken (12) hervorstehenden Absatz (17) ausgebildet ist.

12. Messer (10) nach Anspruch 9 oder 10, **dadurch gekennzeichnet, dass** die Anschlagfläche (15), die dem Fuß (13) naheliegende Wandung einer im Rücken (12) in Richtung der Querachse (Q) verlaufende Nut (16) ist.

13. Messer (10) nach Anspruch 11, **dadurch gekennzeichnet, dass** die Anschlagfläche (15) an mindestens einem am Absatz (17) angeordneten, in Richtung der Schneide (14) weisenden Vorsprung (18) ausgebildet ist.

14. Messer (10) nach einem der Ansprüche 9 bis 13, **gekennzeichnet durch** einen vom Fuß (13) ausgehenden in Richtung der Schneide (14) verlaufenden Schlitz (100), der zum Rücken (12) und zur Spanfläche (11) offen ist.

15. Messer (10) nach Anspruch 12, **dadurch gekennzeichnet, dass** in der Spanfläche (11) eine in Richtung der Querachse (Q) verlaufende Nut (19) vorgesehen ist, die in Längsrichtung (L) gegenüber der im Rücken (12) vorgesehenen Nut (16) versetzt ist, wobei insbesondere deren Abstand (a) zum Fuß (13) kleiner ist als der Abstand (b) der Anschlagfläche (15) zum Fuß (13).

16. Messer (10) nach einem der Ansprüche 9 bis 15, **dadurch gekennzeichnet, dass** die Schneide (14) an einer Platte (10a) ausgebildet ist, die mit einem Schneidenträger (10b) verbunden ist und die Platte (10a) aus einem anderen Material besteht als der Schneidenträger (10b).

17. Messer (10) nach einem der Ansprüche 9 bis 16, **dadurch gekennzeichnet, dass** es aus einem gesinterten Werkstoff besteht.

18. Messer (10) nach Anspruch 17, **dadurch gekennzeichnet, dass** der Rücken (12) sinterroh ausgebildet ist.

19. Messer (10) nach Anspruch 11 und 17, **dadurch gekennzeichnet, dass** die Anschlagfläche (15) ballig und sinterroh ausgebildet ist.

## Claims

1. A cutter head for the subtractive processing of materials, in particular timber materials, plastics, light-metal materials, and/or composite materials therefrom, having at least one cutter (10) and a holder body (1) in which at least one clearance (2) that is open in a radially outward manner for receiving the at least one cutter (10) and a clamping jaw (4) that is activatable by way of a tensioning screw (3) and by means of which the cutter (10) is fixedly clampable in the clearance (2) are provided, wherein the clearance (2) has a detent (5) having a radially inwardly directed detent face and the cutter (10) is insertable into the clearance (2) counter to the force of at least one elastic element (20, 23, 24), **characterized in that** the cutter (10) has an radially outwardly directed detent face (15) which in relation to a longitudinal axis (L) runs at an angle of 92° to 112°, and the cutter (10) by way of the detent face (15) thereof is placeable by the elastic element (20, 23, 24) in a radially outward direction against the radially inwardly directed detent face.

2. The cutter head as claimed in claim 1, **characterized in that** the angle is 92° to 110°, in particular 95° ± 2°, preferably exactly 95°.

3. The cutter head as claimed in claim 1 or 2, **characterized in that** the cutter (10) is provided with a groove (19) which interacts with at least one protrusion (44) that is provided on the clamping jaw (4).

4. The cutter head as claimed in one of the preceding claims, **characterized in that** the detent (5) is configured on a protrusion (6) and/or a groove wall.

5. The cutter head as claimed in one of claims 1 to 3, **characterized in that** the detent face (15) is a wall of a groove (16) that is disposed in the cutter (10), or is formed on a shoulder (17) that is provided on the cutter (10).

6. The cutter head as claimed in claim 5, **characterized in that** at least one radially outwardly directed protrusion (18) on which the detent face (15) is configured is provided on the shoulder (17).

7. The cutter head as claimed in one of the preceding claims, **characterized in that** the elastic element (20) is attached to the clamping jaw (4).

8. The cutter head as claimed in one of claims 1 to 6, **characterized in that** the elastic element (24) is connected to the tensioning screw (3), preferably being a disk that is placed onto the tensioning screw (3).

9. A cutter (10) for use in a cutter head as claimed in one of the preceding claims, having a blade (14), a spine (12), a chip surface (11), a base (13), and a longitudinal axis (L) and a transverse axis (Q), **characterized by** a detent face (15) on the spine (12) that points in the direction of the blade (14), extends in the direction of the transverse axis (Q), and in relation to the longitudinal axis (L) runs at an angle (α) of 92° to 112°.

10. The cutter (10) as claimed in claim 9, **characterized in that** the angle is 92° to 110°, in particular 95° ± 2°, preferably exactly 95°.

11. The cutter (10) as claimed in claim 9 or 10, **characterized in that** the detent face (15) is configured on a shoulder (17) that projects from the spine (12).

12. The cutter (10) as claimed in claim 9 or 10, **characterized in that** the detent face (15) is that wall of a groove (16) that in the spine (12) runs in the direction of the transverse axis (Q) and that is proximal to the base (13).

13. The cutter (10) as claimed in claim 11, **characterized in that** the detent face (15) is disposed on at least one protrusion (18) that is disposed on the shoulder (17) and points in the direction of the blade (14).

14. The cutter (10) as claimed in one of claims 9 to 13, **characterized by** a slot (100) that emanates from the base (13) and runs in the direction of the blade (14) and that is open toward the spine (12) and the chip surface (11).

15. The cutter (10) as claimed in claim12, **characterized in that** a groove (19) that runs in the direction of the transverse axis (Q) and in relation to the groove (16) that is provided in the spine (12) is offset in the longitudinal direction (L) is provided in the chip surface (11), wherein in particular the spacing (a) of said groove (19) from the base (13) is smaller than the spacing (b) of the detent face (15) from the base (13).

16. The cutter (10) as claimed in one of claims 9 to 15, **characterized in that** the blade (14) is configured on a plate (10a) which is connected to a blade holder (10b), the plate (10a) being composed of a material that is different from that of the blade holder (10b).

17. The cutter (10) as claimed in one of claims 9 to 16, **characterized in that** the former is composed of a sintered material.

18. The cutter (10) as claimed in claim 17, **characterized in that** the spine (12) is configured so as to be untreated post sintering.

19. The cutter (10) as claimed in claims 11 and 17, **characterized in that** the detent face (15) is configured so as to be spherical and untreated post sintering.

## Revendications

1. Tête de coupe permettant l'usinage de matériaux par enlèvement de copeaux, en particulier matériaux à base de bois, matériaux plastiques, matériaux en métal léger et/ou matériaux composites, comprenant au moins un couteau (10) et un corps porteur (1), dans lequel sont prévus au moins un évidement (2) ouvert radialement vers l'extérieur pour recevoir l'au moins un couteau (10) et une mâchoire de serrage (4) agissant par l'intermédiaire d'une vis de serrage (3), mâchoire à l'aide de laquelle le couteau (10) peut être serré fixement dans l'évidement (2), l'évidement (2) comprenant une butée (5) présentant une face de butée dirigée radialement vers l'intérieur, et le couteau (10) peut être inséré dans l'évidement (2) à l'encontre d'une force d'au moins un élément élastique (20, 23, 24), **caractérisée en ce que** le couteau (10) comprend une face de butée (15) dirigée radialement vers l'extérieur, qui s'étend selon un angle compris entre 92° et 112° par rapport à un axe longitudinal (L), et le couteau (10) peut être appliqué par sa face de butée (15) dirigée radialement vers l'extérieur contre la face de butée dirigée radialement vers l'intérieur, sous l'action de l'élément élastique (20, 23, 24).

2. Tête de coupe selon la revendication 1, **caractérisée en ce que** l'angle est de 92° à 110°, en particulier de 95° +/- 2°, de préférence exactement de 95°.

3. Tête de coupe selon la revendication 1 ou 2, **caractérisée en ce que** le couteau (10) est prévu avec une rainure (19) qui interagit avec au moins un bossage (44) prévu sur la mâchoire de serrage (4).

4. Tête de coupe selon l'une quelconque des revendications précédentes, **caractérisée en ce que** la butée (5) est formée sur un bossage (6) et/ou une paroi de rainure.

5. Tête de coupe selon l'une des revendications 1 à 3, **caractérisée en ce que** la face de butée (15) est une paroi d'une rainure (16) agencée dans le couteau (10), ou est formée sur un épaulement (17) prévu sur le couteau (10).

6. Tête de coupe selon la revendication 5, **caractérisée en ce que**, sur l'épaulement (17), il est prévu au moins un bossage (18) dirigé radialement vers l'extérieur, sur lequel la face de butée (15) est formée.

7. Tête de coupe selon l'une quelconque des revendications précédentes, **caractérisée en ce que** l'élément élastique (20) est monté sur la mâchoire de serrage (4).

8. Tête de coupe selon l'une des revendications 1 à 6, **caractérisée en ce que** l'élément élastique (24) est en liaison avec la vis de serrage (3), de préférence est un disque posé sur la vis de serrage (3).

9. Couteau (10) destiné à une tête de coupe selon l'une quelconque des revendications précédentes, comprenant un tranchant (14), un dos (12), une face d'attaque (11), un pied (13) et un axe longitudinal (L) ainsi qu'un axe transversal (Q), **caractérisé par** une face de butée (15) placée sur le dos (12) en direction du tranchant (14) et qui s'étend en direction de l'axe transversal (Q) et selon un angle (a) compris entre 92° et 112° par rapport à l'axe longitudinal (L).

10. Couteau (10) selon la revendication 9, **caractérisé en ce que** l'angle est de 92° à 110°, en particulier de 95° +/- 2°, de préférence exactement de 95°.

11. Couteau (10) selon la revendication 9 ou 10, **caractérisé en ce que** la face de butée (15) est formée sur un épaulement (17) en saillie depuis le dos (12).

12. Couteau (10) selon la revendication 9 ou 10, **caractérisé en ce que** la face de butée (15) est la paroi, proche du pied (13), d'une rainure (16) s'étendant en direction de l'axe transversal (Q) dans le dos (12).

13. Couteau (10) selon la revendication 11, **caractérisé en ce que** la face de butée (15) est formée sur au moins un bossage (18) agencé sur l'épaulement (17) et dirigé vers le tranchant (14).

14. Couteau (10) selon l'une des revendications 9 à 13, **caractérisé par** une fente (100) s'étendant depuis le pied (13) en direction du tranchant (14), la fente étant ouverte au dos (12) et à la face d'attaque (11).

15. Couteau (10) selon la revendication 12, **caractérisé en ce qu'**il est prévu dans la face d'attaque (11) une rainure (19) s'étendant en direction de l'axe transversal (Q), ladite rainure étant décalée en direction longitudinale (L) par rapport à la rainure (16) prévue dans le dos (12), et **en ce qu'**en particulier son écart (a) par rapport au pied (13) est inférieur à l'écart (b) de la face de butée (15) par rapport au pied (13).

16. Couteau (10) selon l'une des revendications 9 à 15, **caractérisé en ce que** le tranchant (14) est formé sur une plaquette (10a), qui est reliée à un porte-tranchant (10b) et la plaquette (10a) est constituée d'un matériau différent de celui du porte-tranchant (10b).

17. Couteau (10) selon l'une des revendications 9 à 16, **caractérisé en ce qu'**il est constitué d'un matériau fritté.

18. Couteau (10) selon la revendication 17, **caractérisé en ce que** le dos (12) est formé brut de frittage.

19. Couteau (10) selon la revendication 11 et 17, **caractérisé en ce que** la face de butée (15) est formée bombée et brute de frittage.
